Europäisches Patentamt

European Patent Office

Office européen des brevets

(11) Publication number: **0 283 158**
**A2**

# EUROPEAN PATENT APPLICATION

(21) Application number: **88301717.0**

(22) Date of filing: **29.02.88**

(51) Int. Cl.⁴ **A01B 59/043**

(30) Priority: **13.03.87 DE 3708099**

(43) Date of publication of application:
**21.09.88 Bulletin 88/38**

(84) Designated Contracting States:
**AT DE ES FR GB IT NL SE**

(71) Applicant: **J.I. Case GmbH**
**Industriestrasse 39**
**D-4040 Neuss/Rhein(DE)**

(72) Inventor: **Schillings, Dieter**
**Martin-Rieffert-Strasse 60**
**D-4156 Willich 1(DE)**

(74) Representative: **Geldard, David Guthrie et al**
**URQUHART-DYKES AND LORD Tower House**
**Merrion Way**
**Leeds West Yorkshire LS2 8PA(GB)**

(54) Device for stowing the inoperative upper link of a hydraulic threepoint attachment apparatus on farming tractors.

(57) In order to provide the support for an inoperative upper link with additional functions, for instance the axial securing of the bolt in the draft jaw, the support (5) for the swung-up link (6) merges at the bottom directly with the bolt (9) for the draft jaw (1) which is integrated with the upper link bearing block (2) and at the top with an arcuate member (10) which has the same internal radius as the external radius of the contacting zone (10) of the upper link (6). A ring (11), which is longitudinally displaceable on the upper link (6), secures the upper link by fitting over the arcuate member (10). The support (5) is taken at the bottom around the bearing eye (7) at the tractor end of the upper link (6) and secures the bolt against upward axial movement. The support (5) runs parallel to and at a distance from the radiator grille (14) of the tractor engine bonnet.

*Fig. 1.*

# Device for stowing the inoperative upper link of a hydraulic three-point attachment apparatus on farming tractors.

The invention relates to a device for stowing the inoperative link of a hydraulic three-point attachment apparatus on farming tractors.

The upper link of a hydraulic three-point attachment apparatus is not required when the tractor is on a transport journey or an item of equipment is coupled only to the lower links. In these cases, the inoperative upper link must be stowed. The special features of the hydraulic power lift mechanism and of the projecting power take-off shaft at the rear or front end of a tractor generally only allow stowing of the upper link in a swung-up position.

There are no particular difficulties in doing this in the case of a hydraulic three-point attachment apparatus at the tractor rear end. It is known in many instances to secure the stowed upper link by means of a simple hook which is suspended in a clip or an eyelet fastened on the upper link. An additional clamping connection can be effected by locking screws, preventing the stowed upper link from rattling when travelling over uneven ground.

It is disadvantageous, however, that locking screws can become rusted-in or loosened in the course of time.

It is known from U.S. Patent Specification No. 2,929,458 to connect an eyelet pushed over the upper link end to a hook which is disposed in a hole in a plate fixed on the tractor. In this case it is disadvantageous that the hook may jump out under the effect of vibrations during the journey and thus release the upper link, resulting in damage to said link and to the tractor.

A mount for the upper link of a three-point attachment apparatus is known from German Utility Model No. 1,974,937, in which there is provided a retaining jaw on which a hook-shaped member, under the influence of a spring, is pivoted for closure of the opening.

In the case of a hydraulic three-point attachment apparatus at the front end of a tractor, there is the problem of securing the inoperative upper link in its swung-up position to the radiator grille or to the engine bonnet. Over the course of time, this causes defects and deformations to said grille or bonnet.

The bearing block for the upper link is usually provided with two alternative pairs of aligned holes. The tractor end of the upper link is pivotally mounted in either pair of aligned holes by means of a pin which is axially secured. If the upper link bearing block is arranged in the centre of the vehicle in the direct vicinity of the draft jaw for equipment attachment or is connected to said draft jaw in integrated manner, difficulties may arise in the introduction and removal of the bolt in the draft jaw if the hand grip necessary for this protrudes into the region of the two pairs of holes for the upper link.

It is the object of the invention to provide a device for stowing the inoperative upper link of a hydraulic three-point attachment apparatus on farming tractors, which device performs a multiple function, namely apart from the stowing of the upper link in swung-up position, also the axial securing of the bolt in the draft jaw, the protection against damage to the radiator grille or the engine bonnet with three-point attachment apparatus provided at the front, and the provision of guidance in pinning or re-pinning the bearing eye at the tractor end of the upper link in one of the two pairs of holes in the upper link bearing block.

This object is achieved by the characterising features of Claim 1.

The connection of the upper link bearing block to the draft jaw allows these two components to be integrated in an advantageous way between front-mounted ballast weights.

The upwardly-extending support for the upper link allows the latter to be stowed in inoperative position as well as held at a distance from the radiator grille in the case of frontal attachment on the tractor. Securing of the upper link is effected by engagement between the longitudinally-displaceable ring on the upper link and the arcuate member at the upper end of the support, achieved by pushing the ring over the arcuate member with a press fit.

In order that the upper link can be stowed in inoperative position even when it is mounted offset from the support with the bearing eye at its tractor end in the lower pair of holes, either the upper part of the support may be flexurally resilient or the arcuate member may be connected in flexurally resilient manner to the support. The same purpose is achieved if the ring has an internal diameter widening conically downwards.

The bolt, which is connected to the support and is introduced into aligned vertical holes of the draft jaw, is secured against both upward and downward axial movement; against upward movement by the lower end of the support for the upper link running parallel to the plane joining the centre-lines of the two pairs of aligned holes in the two parallel lugs of the upper link bearing block and abutting against the bearing eye at the tractor end of the upper link; and against downward movement by an upper zone of the bolt of larger diameter than a lower zone thereof being seated either in a stepped hole in the upper part of the draft jaw or upon the equipment attachment eyelet inserted in said jaw. In the latter case, the stepped diameter of the bolt and the differing diameters of the holes in the draft jaw facilitate the removal of the bolt from said jaw in the event of any damage to the bolt, so that the latter does not jam during pulling out. The bolt, and thus the arcuate member at the upper end of the support, are secured against turning by the confinement of the support between the two parallel lugs of the upper link bearing block.

In an advantageous development of the invention, the support for the upper link runs in front of and parallel to the radiator grille of the engine bonnet, sloping forwards from bottom to top.

An exemplary embodiment of the device for the stowing of an upper link according to the invention, which embodiment is described in more detail in the description, is illustrated in the drawings, of which:-

Fig. 1 shows a side view of the upper link bearing block and the integrated draft jaw with its bolt, with the upper link mounted in the upper pair of holes in the bearing block;

Fig. 2 shows a side view of the upper link support disposed in front of the radiator grille, with the upper link mounted in the lower pair of holes in the upper link bearing block;

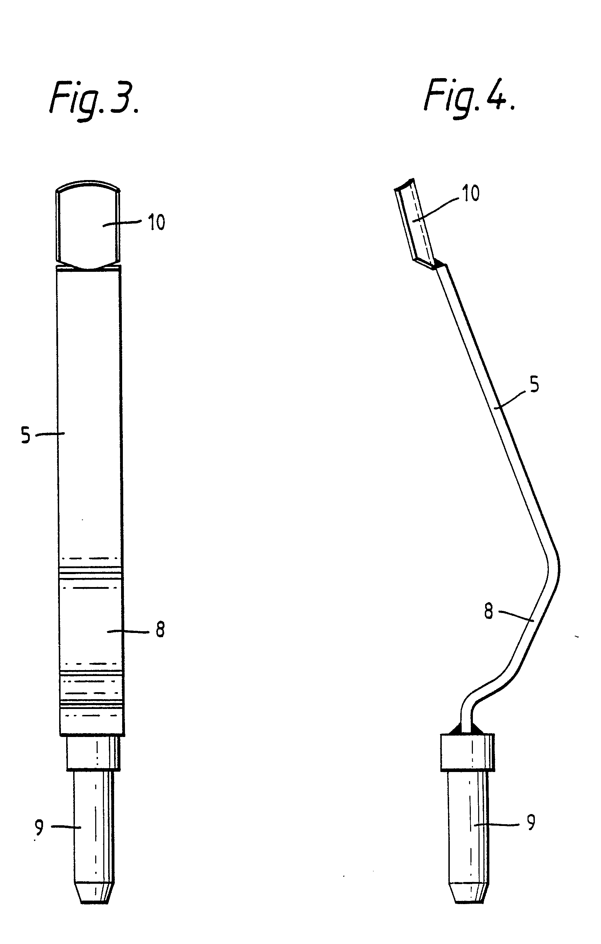

Fig. 3 shows a front view of the upper link support with integrated bolt;

Fig. 4 shows a side view of the upper link support with integrated bolt;

Fig. 5 shows in section a side view of the upper link bearing block and integrated draft jaw, with holes of differing diameters formed in said jaw for the reception of the bolt; and

Fig. 6 shows a front view of the upper link bearing block with the bolt and integrated upper link support inserted in the draft jaw.

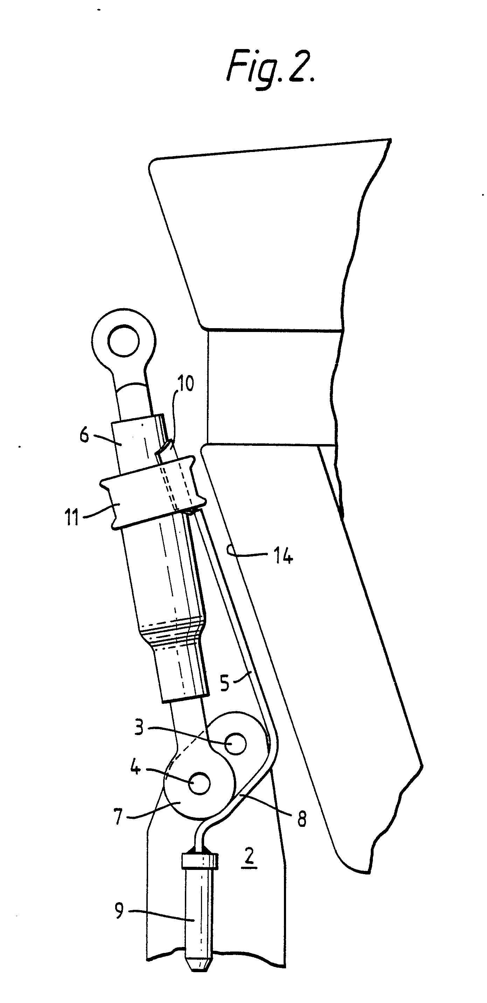

Referring now to the drawings, a bearing block 2 for the pivotal mounting of an upper link 6 is disposed in front of the lower end of the radiator grille 14 (see Fig. 2) of the engine bonnet of a farming tractor. Integrated with the bearing block 2 is a draft jaw 1 for equipment attachment.

The upper link bearing block 2 has two parallel lugs in which there are formed two pairs 3, 4 of aligned holes for the alternative mounting of the upper link 6.

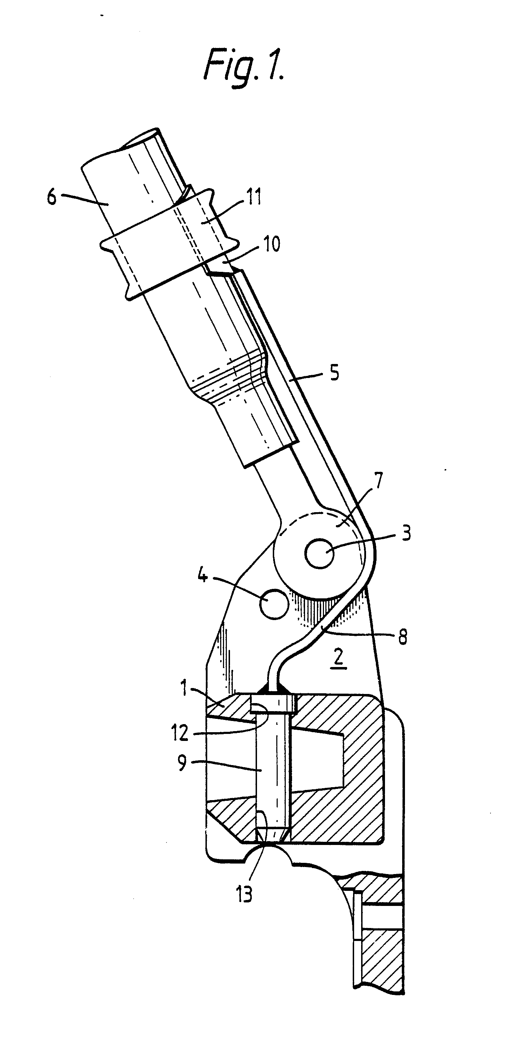

As Fig. 1 illustrates, a sloping support 5 is provided for the upper link 6 in its inoperative position, which support is taken around the bearing eye 7 at the tractor end of the upper link 6 and is welded at its lower end 8 to a bolt 9. This bolt 9 enables an item of equipment to be articulated in the draft jaw 1.

At the upper end of the support 5, at a distance from the bearing eye 7, there is attached an arcuate member 10 which has the same internal radius as the external radius of the contacting zone of the upper link 6. Said link can be secured in the swung-up inoperative position by fitting a ring 11, loosely mounted on the upper link 6 and longitudinally displaceable thereon, over the arcuate member 10.

In order to compensate for the angular offset of the upper link 6 relative to the support 5 which occurs upon mounting of the bearing eye 7 of said link in the lower pair 4 of the holes in the upper link bearing block 2, either the upper part of the support 5 is itself flexurally resilient or the arcuate member 10 is connected in flexurally resilient manner to the support 5. For the same purpose, the ring 11 may have an internal diameter widening conically downwards.

The lower end 8 of the support 5 runs parallel to the plane joining the centre-lines of the two pairs 3, 4 of aligned holes in the two parallel lugs of the upper link bearing block 2. As a result, the bolt 9 welded to the support 5 is secured against upward axial movement, since the lower end 8 of the support 5 abuts against the bearing eye 7 at the tractor end of the upper link 6 irrespective of whether said eye is mounted in the upper pair 3 or the lower pair 4 of holes.

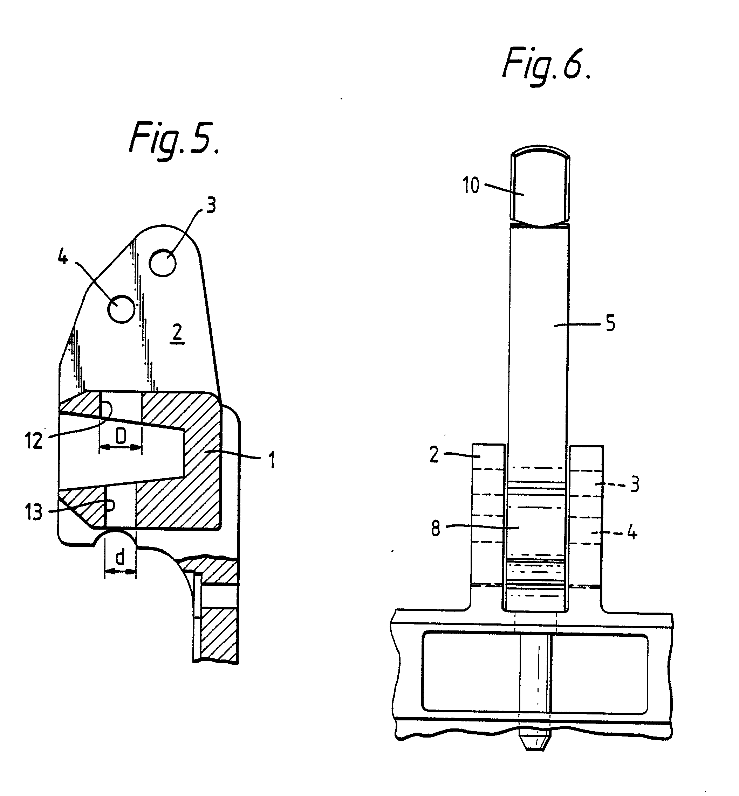

Securing of the bolt 9 against downward axial movement can be achieved as shown in Fig. 5 wherein the draft jaw 1 has holes 12 and 13 of differing diameters, for reception of the bolt 9, in its upper and lower parts, the diameter D of the upper hole 12 being larger that the diameter d of the lower hole 13. The bolt 9 has, accordingly, an upper zone of larger diameter than its lower zone, the step between said zones seating upon the equipment attachment eyelet inserted in the draft jaw 1. This arrangement facilities removal of the bolt 9 if it becomes damaged. Alternatively, securing of the bolt 9 against downward axial movement can be achieved as shown in Fig. 1 wherein the hole 12 in the upper part of the draft jaw 1 is stepped and the step in the bolt 9 seats within the hole 12. Furthermore, in both of these arrangement the width of the support 5 is made greater than the diameter of the upper end of the hole 12, so that supporting edges of the lower end 8 of the support 5 project radially beyond the periphery of the hole 12 on the upper surface of the draft jaw 1.

## Claims

1. A device for stowing the inoperative upper link of a hydraulic three-point attachment apparatus on farming tractors, characterised by an upper link bearing block (2) connected to the draft jaw (1) for attached equipment and also an upwardly-extending support (5) for the upper link (6) in its inoperative position, which support is taken around the bearing eye (7) at the tractor end of the upper link, merges at its lower end (8) with the bolt (9) for the draft jaw (1), and has at its upper end, at a distance from the bearing eye (7), means for securing the upper link (6) to said support.

2. A device according to Claim 1, characterised in that the upper link bearing block (2), which comprises two parallel lugs, has two pairs of aligned holes (3, 4) for the alternative mounting of the bearing eye (7) at the tractor end of the upper link (6), the lower end (8) of the support (5) running parallel to the plane joining the centre-lines of said pairs of holes.

3. A device according to either of the preceeding claims, characterised in that the means for securing the upper link (6) to the support (5) comprise an arcuate member (10) connected to the upper end of the support, and a ring (11) for securing said link to said member.

4. A device according to Claim 3, characterised in that the ring (11) loosely surrounds the upper link and is longitudinally displaceable thereon.

5. A device according to Claim 3 or Claim 4, characterised in that the upper part of the support (5) is flexurally resilient.

6. A device according to Claim 3 or Claim 4, characterised in that the arcuate member (10) is connected in flexurally resilient manner to the support (5).

7. A device according to Claim 3 or Claim 4, characterised in that the ring (11) has an internal diameter widening conically downwards.

8. A device according to any one of the preceding claims, characterised in that the bolt (9) is stepped in diameter and seated in holes (12, 13) of corresponding diameters in the draft jaw (1), and is thereby secured against downward axial movement.

9. A device according to Claim 8, characterised in that the diameter (D) of the upper hole (12) is greater that the diameter (d) of the lower hole (13) in the draft jaw (1).

10. A device according to Claim 8, characterised in that the upper hole (12) is stepped and, below the larger diameter (D), is reduced to the smaller diameter (d).

11. A device according to any one of the preceding claims, characterised in that the support (5) for the upper link (6) is welded at its lower end (8) to the bolt (9).

12. A device according to any one of the preceding claims, characterised in that the bolt (9) is secured against upward axial movement by abutment of the lower end (8) of the support (5) against the bearing eye (7) of the upper link (6).

13. A device according to any one of the preceding claims, characterised in that the support (5) for the upper link (6) is arranged at the front end of the tractor directly in front of the radiator grille (14), inclined upwards and forwards.

14. A device according to Claim 13, characterised in that the support (5) for the upper link (6) runs parallel to the radiator grille (14).

15. A device according to any one of the preceding claims, characterised in that the draft jaw (1) is arranged at the front end of the tractor between ballast weights.

*Fig.1.*

# Fig.2.

# Fig.3.

# Fig.4.

Fig.5.

Fig.6.